# EUROPÄISCHE PATENTSCHRIFT

(11) **EP 2 766 133 B1**
(45) Veröffentlichungstag und Bekanntmachung des Hinweises auf die Patenterteilung: **14.08.2019**
(21) Anmeldenummer: 11778818.2
(22) Anmeldetag: 11.10.2011
(51) Int. Cl.: B21D 51/44, A61J 1/06, B65D 51/00, A61J 1/14

(54) **VERFAHREN ZUR HERSTELLUNG EINER BÖRDELKAPPE, BÖRDELKAPPE UND BEHÄLTNIS**
METHOD FOR PRODUCING A CRIMP CAP, CRIMP CAP AND CONTAINER
PROCÉDÉ DE FABRICATION D'UNE CAPSULE À SERTIR, CAPSULE À SERTIR ET RÉCIPIENT

(43) Veröffentlichungstag der Anmeldung: 20.08.2014
(73) Patentinhaber: Datwyler Pharma Packaging Belgium NV, 3570 Alken (BE)
(72) Erfinder: WAEBEN, Reinhard Louis Jozef, B-3500 Hasselt (BE); DITTMER, Ralf, 75334 Straubenhardt (DE); VRIJENS, Ronny Prosper Elisabeth, B-3721 Vliermaalroot (BE)
(74) Vertreter: Müller, Enno
(86) Internationale Anmeldenummer: PCT/EP2011/067734
(87) Internationale Veröffentlichungsnummer: WO 2013/053384

(56) Entgegenhaltungen:
- EP-A1- 0 312 308
- EP-A2- 0 663 347
- DE-A1- 4 240 373
- DE-A1- 19 600 746
- DE-A1-102010 038 031
- US-A- 5 794 804

## Beschreibung

Die Erfindung betrifft zunächst ein Verfahren zur Herstellung einer Bördelkappe nach den Merkmalen des Oberbegriffes des Anspruches 1.

Derartige Bördelkappen sind bereits in verschiedener Hinsicht bekannt geworden. Es wird beispielsweise auf die EP 291 658 A1, die EP 663 347 A2 und die EP 598 179 A1 verwiesen. Aus der EP 663 374 A2 ist es bereits bekannt, eine Aluminium-Bördelkappe mit einer Innenkappe gebildet aus einem Kunststoff-Folienabschnitt zu bilden. Hinsichtlich der Herstellung einer Bördelkappe allgemein durch einen Stanz-/Biegeumformvorgang wird auch auf diese Schrift Bezug genommen. Darüber hinaus ist auch auf die US 5 794 804 A1 zu verweisen. Aus letztgenannter Druckschrift ist es bekannt, zur Vermeidung von Partikeln eine aus Aluminium bestehende Metallfolienlage nach Umformung der Metallfolienlage in die Kappenform mit einem polymerischen Material zu beschichten.

Au der EP 120 353 A2 ist eine Bördelkappe bekannt, bei welcher alternativ auf einer metallischen Folienlage eine Kunststoffbeschichtung oder eine Lackschicht vorgesehen ist. Aus der EP 312 308 A1 ist ein kunststoffbeschichtetes Metallblech bekannt. Die DE 42 40 373 A1 beschreibt eine Herstellung von Aufreißdeckeln aus einem Metallblech. Das Metallblech kann hierbei eine Oberflächenschutzschicht in Form einer thermoplastischen Kunststofffolie aufweisen. Die US 5,794,804 A offenbart eine Verschlusskappe für pharmazeutische Behälter, mit einer Metalllage, wobei die Metalllage eine vollständige Kunststoffumhüllung aufweist.

Ausgehend von dem genannten Stand der Technik beschäftigt sich die Erfindung mit der Aufgabe, ein vorteilhaftes Verfahren zur Herstellung einer Bördelkappe aus einer metallischen Folienlage mit einer einen Überzug der Folienlage bildenden Kunststofflage bei möglichster Vermeidung der Gefahr einer Partikelbildung anzugeben.

Diese Aufgabe ist beim Gegenstand des Anspruches 1 gelöst, wobei darauf abgestellt ist, dass zwischen der Kunststofflage und der Folienlage eine Lackschicht vorgesehen wird und dass die Kunststofflage zur Bestimmung der farblichen Erscheinung der Bördelkappe durchsichtig vorgesehen wird oder die Kunststofflage transparent ausgebildet wird und mit einem eine Farbwirkung hervorrufenden, durch die Kunststofflage hindurch sichtbaren Klebstoff mit der metallischen Folienlage verbunden wird. Eine bereits kunststoffbeschichtete Folienlage als Ausgangsmaterial aufweisender Materialstreifen wird durch Ausstanzen und Tiefziehen zu der Bördelkappe geformt.

Die Erfindung geht den Weg, einen bereits als beschichtete metallische Folienlage vorliegenden Ausgangswerkstoff zur Herstellung der Bördelkappe zu nutzen. Die Beschichtung mit der Kunststofflage ist bereits gegeben, wenn mit dem Ausstanzen und Umformen zur Bördelkappe begonnen wird. Hierbei nimmt die Erfindung in Kauf, dass, zumindest zunächst, eine Schnittkante der Bördelkappe nicht mit der Kunststofflage überdeckt ist.

Zum einen ist hiermit ein sehr rationelles Herstellungsverfahren angegeben. Es können bereits handelsüblich vorhandene, wenn auch bislang zu diesem Zweck nicht verwendete Materialstreifen, die eine metallische Folienlage mit entsprechendem Überzug aufweisen, verwendet werden. Zum anderen hat sich gezeigt, dass im Hinblick auf die besonderen Anforderungen an eine Bördelkappe für ein Gefäß, das pharmazeutische Substanzen enthält, wie insbesondere eine mit beispielsweise Medikamentenpulver oder Medikamentenflüssigkeit gefüllte Ampulle, eine sehr starke Herabsetzung der Gefahr einer Absonderung von Partikeln, die ansonsten beim Handhaben einer Bördelkappe auftreten können, erreicht wird. Die genannte Gefahr einer Absonderung ist hierbei in praktisch allen Stationen der Handhabung gegeben. So insbesondere beim Herstellen, Transport, Waschen, Sterilisieren und/oder Aufbringen der Bördelkappe auf ein entsprechendes Gefäß.

Gegenstand der Erfindung ist auch eine Bördelkappe nach den Merkmalen des Oberbegriffs des Anspruchs 4.

Im Hinblick auf den bereits eingangs genannten Stand der Technik beschäftigt sich die Erfindung auch insofern mit der Aufgabe, eine weitere vorteilhafte Bördelkappe zur Verfügung zu stellen.

Diese Aufgabe ist hinsichtlich der Bördelkappe zunächst beim Gegenstand des Anspruches 4 gelöst, wobei darauf abgestellt ist, dass zwischen der Kunststofflage und der Folienlage eine Lackschicht angeordnet ist und dass die Kunststofflage zur Bestimmung der farblichen Erscheinung der Bördelkappe durchsichtig vorgesehen ist oder dass die Kunststofflage transparent ausgebildet ist und mit einem eine Farbwirkung hervorrufenden, durch die Kunststofflage hindurch sichtbaren Klebstoff mit der metallischen Folienlage verbunden ist.

Gemäß Anspruch 6 ist auch ein Behältnis angegeben mit einer Bördelkappe, wie sie durch einen der Ansprüche 4 oder beschrieben ist.

Es ist bevorzugt, wie auch schon grundsätzlich angesprochen, dass das Ausstanzen und Tiefziehen in einem kombinierten einzigen Arbeitsgang vorgenommen wird.

Weiter ist bevorzugt, dass das Stanzwerkzeug im Hinblick auf die Herstellung derart ausgebildet wird, dass sich am Stanzrand eine Zugverlängerung der Kunststofflage, die zum Vorstehen der Kunststofflage über den Stanzrand der Folienlage führt, einstellt. Es ist insofern erkannt worden, dass mittels einer vergleichsweise stumpfen Einstellung des Stanzwerkzeuges diese Zugverlängerung der vorhandenen Kunststofflage erreicht werden kann. Die tatsächlich zur Erreichung dieses Effekts - nur - erforderliche Schärfe des Stanzwerkzeugs kann empirisch ermittelt werden. Sie kann auch unterschiedlich sein in Abhängigkeit der tatsächlichen Ausbildung der Folienlage bzw. der Kunststofflage.

Nach dem, wie beschrieben, bevorzugt gleichzeitig sich vollziehenden Ausstanzen und Tiefziehen des ausgestanzten Folienabschnitts zu der Bördelkappe ergibt sich ein im Querschnitt U-förmiges Kappenteil, dessen Rand entweder eine Randkante mit praktisch auf gleicher Höhe abgetrennter Kunststofflage und Folienlage aufweist oder eine Randkante mit einer gegenüber der Folienlage außen verlängert übergreifenden Kunststofflage. Die Verlängerung kann hierbei vergleichsweise gering sein. Sie bemisst sich bevorzugt in der Größenordnung der Dicke der metallischen Folienlage. Diese Dicke kann beispielsweise 0,05 - 0,5 mm betragen.

Durch dieses Ziehen der Kunststofflage über den genannten Rand der Folienlage hinaus ergibt sich eine Verstreckung der Kunststofflage zugeordnet dem genannten Randbereich. Dieser so verstreckte Bereich der Kunststofflage kann dann in einem weiteren Schritt auf die Schnittkante der Folienlage umgebogen werden und mit dieser verklebt oder beispielsweise verrückt werden.

Durch letztgenannten Vorgang ergibt sich eine Bördelkappe mit einem Überzug der Schnittkante der Folienlage durch den verstreckten Kunststoff. Die Verstreckung ergibt sich im Vergleich zu der Kunststofflage in einem von der Randkante entfernten Bereich. Entfernt ist hier ein Bereich, der 1 mm oder mehr, beispielsweise bis zu 5 mm von der Randkante entfernt ist.

Im Weiteren kann zwischen der Kunststofflage und der metallischen Folienlage eine Lackschicht angeordnet sein. Insbesondere, um der Bördelkappe eine gewünschte Farbgebung, Musterung oder dergleichen zu verleihen. Die Kunststofflage ist jedenfalls in einem solchen Fall vorzugsweise durchsichtig oder nur leicht eingefärbt. Die farbliche Erscheinung kann dann wesentlich durch die Lackierung bestimmt werden. Bei der Lackschicht handelt es sich vorzugsweise um einen Lack auf Epoxydharzbasis. Die Lackschicht kann eine Dicke von beispielsweise 2 - 5 µm aufweisen.

Es kann auch vorgesehen sein, dass die Kunststofflage transparent ausgebildet ist und mit einem eine Farbwirkung hervorrufenden, durch die Kunststofflage hindurch sichtbaren Klebstoff mit der metallischen Folienlage verbunden ist. In dieser Ausgestaltung kann eine gewünschte Farbwirkung allein durch Anwendung eines diesbezüglich eingefärbten Klebstoffes erreicht werden. Die Lackschicht kann dann in Wegfall kommen. Es ist auch nur noch erforderlich, als Kunststofflage beispielsweise lediglich eine durchsichtige Kunststofffolie aufzubringen. Dies Ausgestaltung ist bevorzugt an der Oberseite bzw. Innenfläche der Bördelkappe verwirklicht. Sie kann aber auch zusätzlich an der Unter- bzw. Innenseite verwirklicht sein.

Die genannte Kunststofflage kann eine gleiche Dicke aufweisen wie die metallische Folienlage, sie kann aber auch noch dicker sein, etwa bis hin zu einer 3- bis 3-fachen Dicke der metallischen Folienlage oder bis hin zu 0,8 mm Dicke.

Die Kunststofflage kann auch beidseitig der Folienlage vorgesehen sein.

Hinsichtlich der Kunststofflage kann es sich um eine übliche PP- oder PE-Folie beispielsweise handeln, die zuvor auf die metallische Folienlage aufgebracht, insbesondere unter Zwischenschaltung einer Haftkleberschicht mit der metallischen Folienlage verklebt ist.

Hinsichtlich der metallischen Folienlage handelt es sich bevorzugt um eine Aluminiumfolienlage.

Die vor- und nachstehend angegebenen Bereiche bzw. Wertebereiche schließen hinsichtlich der Offenbarung auch sämtliche Zwischenwerte ein, insbesondere in 1/10-Schritten der jeweiligen Dimension, gegebenenfalls also auch dimensionslos, also beispielsweise 1/10 µm oder 1/10 mm etc., einerseits zur Eingrenzung der genannten Bereichsgrenzen nach unten und/oder oben, alternativ oder ergänzend aber auch im Hinblick auf die Offenbarung eines oder mehrerer singulärer Werte aus einem jeweiligen Bereich.

Nachstehend ist die Erfindung des Weiteren anhand der beigefügten Zeichnung erläutert, die aber lediglich ein Ausführungsbeispiel darstellt. Hierbei zeigt:
- Fig. 1: einen Abschnitt einer beschichteten metallischen Folienlage;
- Fig. 2: einen Querschnitt durch den Gegenstand gemäß Fig. 1, geschnitten entlang der Linie II-II;
- Fig. 3: eine zu einer Bördelkappe umgeformte metallische Folienlage;
- Fig. 4: eine Ausschnittsvergrößerung aus Fig. 3;
- Fig. 5: eine weitere Ausschnittsvergrößerung eines Gegenstandes gemäß Fig. 3, in alternativer Ausführungsform;
- Fig. 6: eine mit der Bördelkappe versehene Ampulle in prinzipieller Darstellung.

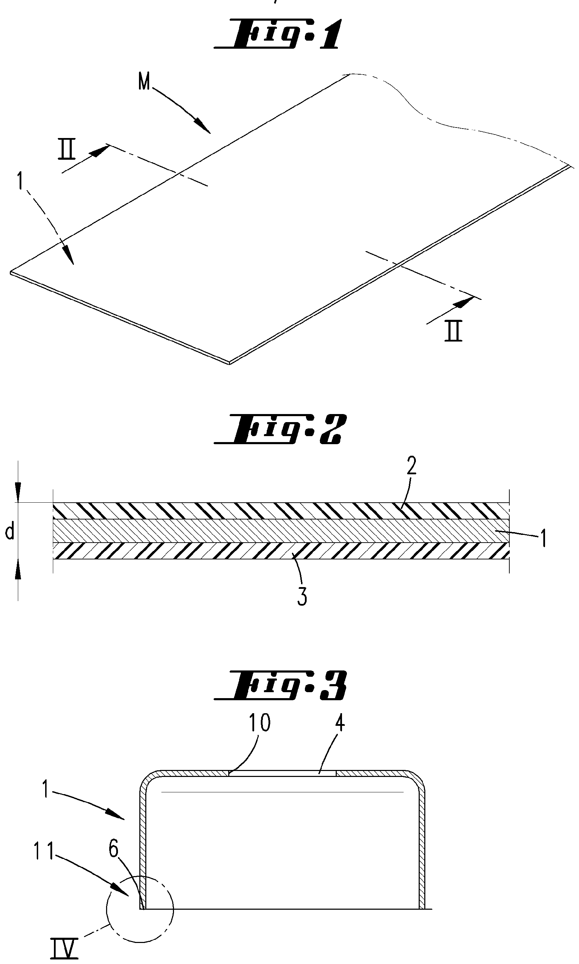

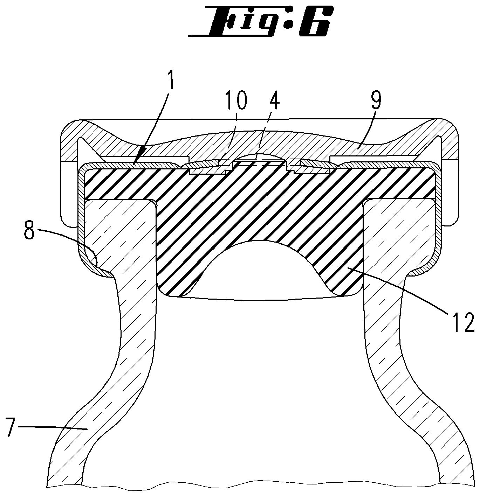

Dargestellt und beschrieben ist zunächst ein Materialstreifen M, der metallische Folienlage 1 aufweist, die, siehe auch Fig. 2, ober- und unterseitig mit einer Kunststofflage 2, 3 beschichtet ist. Die Beschichtung ist, durch eine extrudierte Kunststofflage 2, 3, (Kunststofffolie) vorgenommen, die bevorzugt mittels einer nicht dargestellten Haftvermittlerschicht mit der metallischen Folienlage 1 verbunden ist. Es kann sich alternativ auch um beispielsweise eine blasgeformte oder unmittelbar aufextrudierte Folie handeln. Der Materialstreifen M wird in einem im Einzelnen nicht dargestellten kombinierten Ausstanz- und Umformvorgang zu einer Bördelkappe gemäß Fig. 3 umgeformt. Hierbei wird auch bevorzugt mittig eine Öffnung 4 ausgestanzt, in der im letztlich auf einer Ampulle 7 aufgebrachten Zustand, wie etwa in Fig. 6 dargestellt, ein Kunststoff-Deckelteil 9 aufgenommen sein kann. Bei der metallischen Folienlage 1 handelt es sich beim Ausführungsbeispiel um eine Aluminiumfolienlage.

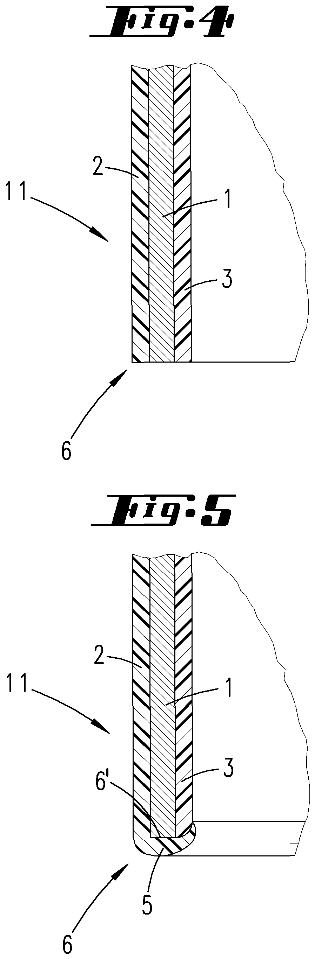

In den Figuren 4 und 5 sind unterschiedliche Ausbildungen der Randkante 6 der Bördelkappe 1 gemäß Fig. 3 dargestellt. Eine gleiche Ausbildung kann sich auch hinsichtlich der Öffnungsrandkante 10 der Öffnung 4 ergeben. Um den Überstand der Kunststofflage 2 an der Öffnungs-Randkante 10 zu erreichen, kann es sich auch empfehlen, den diesbezüglichen Randbereich der Bördelkappe 1 nach unten abzubiegen, in eine etwa parallele Ausrichtung zu der Randkante 6. Eine Länge des nach unten abgebogenen Bereiches kann hierbei relativ gering sein, beispielsweise dem 0,5-- 10-fachen einer Gesamtdicke d der Folienlage 1 entsprechen.

Die Ausführungen betreffend die Verstreckung der Kunststofflage 2 bzw. 3 sind in gleicher Weise bezüglich der Öffnungsrandkante 10 zutreffend.

Die genannte Gesamtdicke d der Folienlage 1 mit der Kunststofflage 2 und/oder 3 kann beispielsweise 50 - 500 µm betragen.

Aus der Darstellung der Fig. 4 ist eine Schnittkante ersichtlich, bei der die beiden Kunststofflagen 2, 3, wie auch die Folienlage 1 eine rechtwinklig zur Vertikalerstreckung des Bördelkappenrandes 11, der hier vergrößert dargestellt ist, verlaufende Schnittkante auf etwa gleicher Höhe aufweisen. Bei der Darstellung der Fig. 5 ist die äußere Kunststofflage 2 derart verlängert durch Verstrecken im Zuge des Stanzvorganges, dass sich ein Übergreifabschnitt 5 ergeben hat, der über die Stirnfläche 6' der Folienlage 1 übergeschlagen ist und beim Ausführungsbeispiel mit der inneren Kunststofflage 3 verbunden ist, beispielsweise klebe- oder schweißverbunden. So ist auch eine vollständige Abdeckung der Stirnkante 6' der metallischen Folienlage 1 erreicht.

In Fig. 6 ist der obere Bereich einer Ampulle 7 dargestellt, in deren Mündung zunächst ein Verschlussstopfen 12 eingesetzt ist, und weiter der Verschlussstopfen 12 von einer Bördelkappe 1 in einer der vorbeschriebenen Ausführungsformen übergriffen ist. Im Einzelnen ist der untere Bördelkappenrand 8 im Zuge des Aufbringens der Bördelkappe 1 auf die Ampulle 7 nochmals durch ein Drückwerkzeug zur Anlage an die Ampulle 7, untergreifend einen äußeren Ampullenmündungsrand 8, angedrückt. In der Öffnung 4 der Bördelkappe 1 ist ein Kunststoff-Deckelteil 9 verankert, wie es im Einzelnen aus der EP 291 658 A1 bekannt ist.

## Patentansprüche

1. Verfahren zur Herstellung einer Bördelkappe für ein Behältnis zur Aufnahme einer pharmazeutischen Substanz, insbesondere Ampulle, wobei die Bördelkappe eine metallische Folienlage aufweist, die jedenfalls außenseitig mit einer einen Überzug der Folienlage bildenden Kunststofflage überdeckt ist, wobei weiter ein eine bereits kunststoffbeschichtete Folienlage aufweisender Materialstreifen (M) durch Ausstanzen und Tiefziehen, zu der Bördelkappe geformt wird, **dadurch gekennzeichnet, dass** zwischen der Kunststofflage und der Folienlage eine Lackschicht vorgesehen wird und dass die Kunststofflage zur Bestimmung der farblichen Erscheinung der Bördelkappe durchsichtig vorgesehen wird oder die Kunststofflage transparent ausgebildet wird und mit einem eine Farbwirkung hervorrufenden, durch die Kunststofflage hindurch sichtbaren Klebstoff mit der metallischen Folienlage verbunden wird.

2. Verfahren nach Anspruch 1, **dadurch gekennzeichnet, dass** ein zum Ausstanzen verwendetes Stanzwerkzeug derart ausgebildet wird, dass sich am Stanzrand eine Zugverlängerung der Kunststofflage, die über den Stanzrand der Folienlage vorsteht, einstellt.

3. Verfahren nach Anspruch 1 oder 2, **dadurch gekennzeichnet, dass** das Ausstanzen und Tiefziehen in einem kombinierten einzigen Arbeitsgang vorgenommen wird.

4. Bördelkappe für ein Behältnis (7) zur Aufnahme einer pharmazeutischen Substanz, insbesondere einer Ampulle (7), die mit einer metallischen Folienlage (1) und jedenfalls außenseitig einer einen Überzug der Folienlage bildenden Kunststofflage (2, 3) überdeckt ist, wobei weiter eine Bördelkappen-Randkante (6) ausgebildet ist und die Bördelkappen-Randkante (6) eine sowohl die Folienlage (1) sowie die Kunststofflage (2, 3) durchsetzende Schnittkante aufweist, **dadurch gekennzeichnet, dass** zwischen der Kunststofflage und der Folienlage eine Lackschicht angeordnet ist und dass die Kunststofflage zur Bestimmung der farblichen Erscheinung der Bördelkappe durchsichtig vorgesehen ist oder dass die Kunststofflage (2, 3) transparent ausgebildet ist und mit einem eine Farbwirkung hervorrufenden, durch die Kunststofflage (2, 3) hindurch sichtbaren Klebstoff mit der metallischen Folienlage (1) verbunden ist.

5. Bördelkappe nach Anspruch 4, **dadurch gekennzeichnet, dass** die Bördelkappen-Randkante (6) von einem Abschnitt der Kunststofflage (2, 3) überdeckt ist, der im Vergleich zu der Kunststofflage im Übrigen verstreckt ist.

6. Behältnis (7) mit einer pharmazeutischen Substanz, insbesondere Ampulle (7), wobei das Behältnis (7) mit einer Bördelkappe gemäß einem der Ansprüche 4 oder 5 verschlossen ist.

## Claims

1. A method for producing a crimp cap for a container for receiving a pharmaceutical substance, in particular an ampoule, wherein the crimp cap has a metallic foil layer, which is covered over, at least on the outside, with a plastics layer that forms a covering of the foil layer, wherein, furthermore, a material strip (M) having an already plastics coated foil layer is formed into the crimp cap by stamping-out and deep-drawing, **characterized in that** a lacquer coat is provided between the plastics layer and the foil layer, and **in that** the plastics layer is designed to be transparent to enable determination of the color appearance of the crimp cap, or the plastics layer is of transparent configuration and is connected to the metallic foil layer with an adhesive that creates a color effect and is visible through the plastics layer.

2. The method according to claim 1, **characterized in that** a stamping tool which is used for the stamping-out is configured such that, at the stamped margin, a tensile elongation of the plastics layer, which protrudes over the stamped margin of the foil layer, occurs.

3. The method according to claim 1 or 2, **characterized in that** the stamping-out and deep-drawing is conducted in a combined single operation.

4. A crimp cap for a container (7) for receiving a pharmaceutical substance, in particular an ampoule (7), which crimp cap is covered over with a metallic foil layer (1) and, at least on the outside, with a plastics layer (2, 3) that forms a covering of the foil layer, wherein, in addition, a crimp cap marginal edge (6) is formed and the crimp cap marginal edge (6) has a cut edge which passes through both the foil layer (1) and the plastics layer (2, 3), **characterized in that** a lacquer coat is disposed between the plastics layer and the foil layer, and **in that** the plastics layer is designed to be transparent to enable determination of the color appearance of the crimp cap, or **in that** the plastics layer (2, 3) is of transparent configuration and is connected to the metallic foil layer (1) with an adhesive that creates a color effect and is visible through the plastics layer (2, 3).

5. The crimp cap according to claim 4, **characterized in that** the crimp cap marginal edge (6) is covered over by a portion of the plastics layer (2, 3), which portion is stretched in comparison to the rest of the plastics layer.

6. A container (7) containing a pharmaceutical substance, in particular an ampoule (7), wherein the container (7) is closed off with a crimp cap according to one of the claims 4 or 5.

## Revendications

1. Procédé de fabrication d'un capuchon à sertir pour un récipient destiné à contenir une substance pharmaceutique, en particulier une ampoule, dans lequel le capuchon à sertir comprend une couche de feuille métallique qui est recouverte au moins à l'extérieur par une couche de matière plastique formant un revêtement de la couche de feuille, dans lequel en outre une bande de matière (M) présentant déjà une couche de feuille revêtue de matière plastique est mise en la forme du capuchon à sertir par découpage et emboutissage, **caractérisé en ce qu'**une couche de laque est prévue entre la couche de matière plastique et la couche de feuille, et **en ce que** la couche de matière plastique est prévue transparente/translucide pour déterminer l'apparence coloré du capuchon à sertir ou que la couche de matière plastique est prévue transparente et est liée à la couche de feuille métallique par un adhésif produisant un effet coloré et visible à travers la couche de matière plastique.

2. Procédé selon la revendication 1, **caractérisé en ce qu'**un outil de découpage utilisé pour le découpage est conçu de manière que soit produite au bord de découpage un allongement par traction de la couche de matière plastique qui fasse saillie au-delà du bord de découpage de la couche de feuille.

3. Procédé selon la revendication 1 ou 2, **caractérisé en ce que** le découpage et l'emboutissage sont réalisés en une seule opération combinée.

4. Capuchon à sertir pour un récipient (7) destiné à contenir une substance pharmaceutique, en particulier une ampoule (7), qui est recouverte par une couche de feuille métallique (1) et, au moins à l'extérieur, par une couche de matière plastique (2, 3) formant un revêtement de la couche de feuille, dans lequel en outre un bord (6) du capuchon à sertir est formé et le bord (6) du capuchon à sertir présente un bord coupé qui traverse aussi bien la couche de feuille (1) que la couche de matière plastique (2, 3), **caractérisé en ce qu'**une couche de laque est agencée entre la couche de matière plastique et la couche de feuille et **en ce que** la couche de matière plastique est transparente/translucide pour déterminer l'apparence coloré du capuchon à sertir ou **en ce que** la couche de matière plastique (2, 3) est transparente et est liée à la couche de feuille métallique (1) avec un adhésif qui produit un effet coloré et visible à travers la couche de matière plastique (2, 3).

5. Capuchon à sertir selon la revendication 4, **caractérisé en ce que** le bord (6) du capuchon à sertir est recouvert par une partie de la couche de matière plastique (2, 3) qui est étirée en comparaison au reste de la couche de matière plastique.

6. Récipient (7) avec une substance pharmaceutique, en particulier une ampoule (7), le récipient (7) étant fermé par un capuchon à sertir selon l'une des revendications 4 ou 5.
